# EUROPÄISCHE PATENTSCHRIFT

(11) **EP 0 728 988 B1**
(45) Veröffentlichungstag und Bekanntmachung des Hinweises auf die Patenterteilung: **10.05.2000**
(21) Anmeldenummer: 95119252.5
(22) Anmeldetag: 06.12.1995
(51) Int. Cl.: F21V 17/02, F21V 7/00

(54) **Leuchte**
Lamp
Lampe

(30) Priorität: 21.02.1995 DE 29502900 U
(43) Veröffentlichungstag der Anmeldung: 28.08.1996
(73) Patentinhaber: RIDI-LEUCHTEN GmbH, D-72417 Jungingen (DE)
(72) Erfinder: Martinetz Hans, D-72379 Hechingen (DE); Hingst Dieter, D-12555 Berlin (DE)
(74) Vertreter: Heim, Hans-Karl, Dipl.-Ing.

(56) Entgegenhaltungen:
- GB-A- 491 964
- US-A- 4 475 147

## Beschreibung

Die Erfindung betrifft eine Leuchte, insbesondere eine Einbau- oder Anbauleuchte, gemäß dem Oberbegriff des Anspruchs 1.

Einbau- oder Anbauleuchten weisen eine Lampe, beispielsweise eine Kompaktleuchtstofflampe, und in der Regel einen runden, rotationssymmetrischen Reflektor auf. Die Leuchten können auch quadratisch oder rechteckig und mit einem entsprechenden Reflektor ausgebildet sein.

Von der Ausbildung und Formgebung des Reflektors und insbesondere von der Anordnung und Krümmung der Reflektorfläche wird die Lichtabstrahlung einer Leuchte entscheidend beeinflußt. Die Lichtabstrahlung kann engstrahlend bis mittel- und breitstrahlend und symmetrisch oder asymmetrisch erfolgen.

Eine asymmetrische Lichtabstrahlung mit einer Lichtlenkung in eine vorgebbare Richtung ist beispielsweise zur Be- und Ausleuchtung ausgewählter Wandflächen, ausgestellter Objekte und Details in Verkaufsbereichen, Ausstellungen, Messen und von Waren in Lagerhallen und Verkaufsständen und -räumen erforderlich.

Es ist bekannt, asymmetrisch ausgebildete Reflektoren einzusetzen, um eine Lichtlenkung in eine gewünschte Richtung und eine asymmetrische Lichtabstrahlung zu erreichen. Außerdem sind Reflektoreinsätze als zusätzliche Elemente bekannt, die dauerhaft mit dem Reflektor verbunden sind.

Ein Nachteil dieser bekannten asymmetrisch abstrahlenden Leuchtenkonstruktionen ist darin zu sehen, daß eine individuelle Einstellung der Lichtabstrahlung und eine Richtungsänderung der Lichtverteilungskurven nicht ohne weiteres möglich ist, sondern mit einem relativ aufwendigen Ausbau der gesamten Leuchte und einem Wiedereinbau verbunden ist. Für unterschiedliche Lichtabstrahlungen sind verschiedene Reflektoren mit unterschiedlich positionierten Reflektoreinsätzen herzustellen und zu lagern. Dadurch fallen zusätzlich Kosten an.

Es sind Leuchten bekannt, welche einen Reflektor und einen verstellbaren Reflektoreinsatz aufweisen. Eine in der GB-PS 491 964 beschriebene Leuchte weist einen Reflektoreinsatz auf, welcher mit Hilfe einer Trageeinrichtung an einem Lampenschirm als Hauptreflektor befestigt ist und über dessen Umfangsbereich verstellt werden kann. Der Reflektoreinsatz ist an einem verschwenkbaren Arm der Trageeinrichtung angeordnet, welcher in einem vorgebbaren Abstand von einem Haltearm der Trageeinrichtung befestigt werden kann. Da der Reflektoreinsatz an dem verstellbaren Arm angenietet ist, kann lediglich eine radiale Verstellung über den verstellbaren Arm durchgeführt werden.

Aus der US-PS 4,475,147 ist eine Leuchte mit einem Reflektoreinsatz für eine asymmetrische Lichtabstrahlung bekannt, welcher in einem unteren Bereich eines Hauptreflektors verstellbar befestigt ist. Die Befestigung des Reflektoreinsatzes erfolgt in einem vormontierten Zustand, wobei ein Außenring mit Klipselementen versehen wird, ein Innenring über Snap-Lock-Verbindungen mit dem Außenring verbunden wird und danach der Zusatzreflektor mit Hilfe weiterer U-förmiger Befestigungselemente befestigt wird. Diese vormontierte Anordnung wird dann in das Reflektorgehäuse eingeführt und über Rastverbindungen gehalten. Die bekannte Leuchtenkonstruktion weist eine relativ aufwendige Ausbildung auf, und die Verstellung des Reflektoreinsatzes kann nur über eine Verstellung des gesamten Innenrings am Außenring durchgeführt werden.

Der Erfindung liegt die **Aufgabe** zugrunde, eine Leuchte zu schaffen, welche den verschiedenen und sich ändernden Anforderungen einer symmetrischen und asymmetrischen Lichtabstrahlung mit einer außerordentlich einfachen und leicht handhabbaren Reflektorkonstruktion gerecht wird.

Erfindungsgemäß wird die Aufgabe durch die Merkmale des Anspruchs 1 gelöst. Zweckmäßige und vorteilhafte Ausgestaltungen sind Gegenstand der Unteransprüche und der Figurenbeschreibung.

Ein Grundgedanke der Erfindung besteht darin, bei einer Leuchte mit einem verstellbar angeordneten Reflektoreinsatz zwischen einer Lampe und einem einen Lichtlenker darstellenden Reflektor den Reflektoreinsatz derart auszubilden, daß er insbesondere leicht lösbar angeordnet und vorteilhafterweise auch nachträglich in eine Standardausführung einer Leuchte ohne großen Aufwand eingebaut und auch jederzeit wieder ausgebaut werden kann.

Erfindungsgemäß ist ein Reflektoreinsatz für eine asymmetrische Lichtabstrahlung einer Leuchte, insbesondere einer Einbau- oder Anbauleuchte, welche verstellbar und mit wenigstens einem unteren Halteelement an einem Rand eines Reflektors fixiert werden kann, mit einem Halteelement versehen, welches eine Fixierung des Reflektoreinsatzes im Zentrum des Reflektors gewährleistet.

Der erfindungsgemäße Reflektoreinsatz ist somit über ein unteres Halteelement an einem Rand des Reflektors und über ein weiteres, insbesondere oberes Halteelement im Zentrum des Reflektors gehalten und erstreckt sich vorteilhafterweise zwischen dem unteren und oberen Halteelement mit einer Reflektorfläche.

Der Reflektoreinsatz kann zur relativ einfachen Herstellung als ein einteiliges Formteil ausgebildet sein. Die Reflektorfläche des Reflektoreinsatzes ist im eingebauten Zustand in einem definierten Abstand vom Reflektor angeordnet. Die Reflektorfläche des Reflektoreinsatzes weist zweckmäßigerweise eine vom Reflektor abweichende Krümmung auf, welche entsprechend der gewünschten Lichtlenkung ausgebildet wird.

Der Reflektoreinsatz liegt mit seinen Längskanten und einer Oberkante nahezu am Reflektor an, um eine homogene Lichtabstrahlung zu gewährleisten.

Eine untere und obere Halterung des verstellbaren Reflektoreinsatzes erfolgt am unteren Rand des Reflektors und im Zentrum des Reflektorbodens, um insbesondere bei einer runden Leuchte eine leichte und rasche Verstellung über Umfangsbereiche des Reflektors zu gewährleisten. Ein Halteelement umgreift den Reflektor, insbesondere einen nahezu horizontalen Reflektorrand, derart, daß eine Halterung und gleichzeitig ein Verschieben möglich ist. Für die obere Halterung kann das Halteelement im Zentrum des Reflektors zweckmäßigerweise als eine gabelförmige Befestigungslasche ausgebildet sein. Eine Ausnehmung der Befestigungslasche umgreift dann ein Befestigungselement des Reflektors und ermöglicht gleichzeitig eine begrenzte Neigungsverstellung. Eine Sicherung dieser verstellbaren Befestigungslasche kann beispielsweise mit einer Mutter erfolgen.

Eine Montage oder Nachrüstung einer Leuchte mit dem lösbar anzuordnenden Reflektoreinsatz erfolgt in der Art, daß zunächst das Halteelement des Reflektoreinsatzes auf den unteren Reflektor bzw. Reflektorrand aufgeschoben wird und danach der vorpositionierte Reflektoreinsatz mit der oberen Befestigunglasche auf das Befestigungselement des Reflektors aufgeschoben und gesichert wird.Die Neigungsverstellung wird von der Länge der Ausnehmung in der Befestigungslasche bestimmt.

Auf diese Weise kann mit einem äußerst geringen Aufwand eine Standardleuchte, beispielsweise eine runde Einbauleuchte mit einem Parabolreflektor, welche eine relativ breitstrahlende Lichtverteilungskurve aufweist, in eine mittel- bis engstrahlende Leuchte mit einer asymmetrischen Lichtverteilungskurve umgerüstet werden.

Besonders vorteilhaft ist es, daß der lösbare Reflektoreinsatz ein Formteil ist, welches vor Ort und in eine bereits installierte Leuchte eingebaut werden kann.

Die verstellbare Anordung des Reflektoreinsatzes ermöglicht in einer besonders zweckmäßigen konstruktiven Ausbildung eine Lichtlenkung und Richtungsänderung der asymmetrischen Lichtabstrahlung in jede Richtung.

Zweckmäßigerweise erfolgt diese Verstellung von außen und ohne die Notwendigkeit, die gesamte Leuchte oder einzelne Bauteile ausbauen zu müssen. Es ist ein Befestigungselement vorgesehen, welches ein Verschieben des Reflektoreinsatzes bereichsweise ermöglicht.

Der erfindungsgemäße Reflektoreinsatz ist besonders einfach herzustellen und zu montieren und gewährleistet eine werkzeug lose horizontale Verstellung zur Realisierung einer variablen Lichtlenkung und asymmetrischen Lichtabstrahlung.

Die Erfindung wird nachstehend anhand einer Zeichnung weiter beschrieben; in dieser zeigen:
- Fig. 1: einen Reflektor einer Einbauleuchte mit einem lösbaren Reflektoreinsatz;
- Fig. 2: eine Ansicht gemäß Pfeil A nach einer 45°-Drehung;
- Fig. 3: einen Zuschnitt eines Reflektoreinsatzes nach Fig. 1 und 2 vor einem Biegeprozeß;
- Fig. 4: eine Seitenansicht eines Reflektoreinsatzes gemäß Fig. 3 nach dem Biegeprozeß;
- Fig. 5: eine Lichtverteilungskurve einer Leuchte mit symmetrischer Lichtabstrahlung und
- Fig. 6: eine Lichtverteilungskurve einer breitstrahlenden symmetrischen Leuchte.

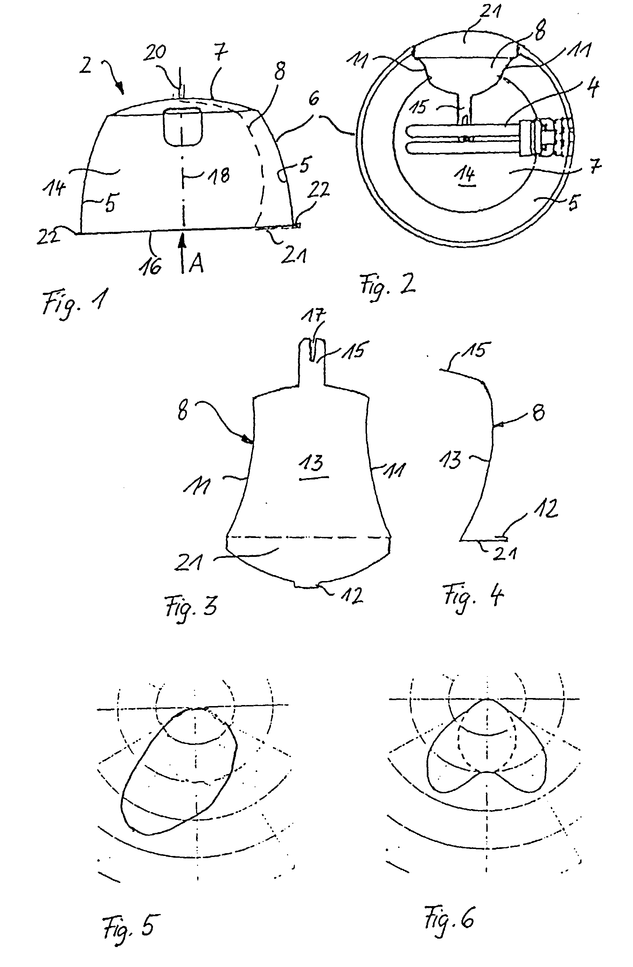

Fig. 1 und 2 zeigen einen Reflektor 6 einer runden Einbauleuchte 2 und eine Kompaktleuchtstofflampe als Lampe 4. Die Lampe 4 ragt in einer waagerechten Anordung in einen Innenraum 14 des parabolartig ausgebildeten Reflektors 6. Weitere Bauteile der Leuchte sind nicht dargestellt.

Der Reflektor 6 und ein Reflektoreinsatz 8 sind aus Aluminium hergestellt, wobei Reflektorflächen 5 des Reflektors 6, der Reflektoreinsatz 8 und ein Reflektorboden 7 hochglänzend ausgebildet sind. Die Reflektorflächen 5, der Reflektoreinsatz 8 und der Reflektorboden 7 können auch einheitlich matt oder nur einzelne Bauteile 5, 8, 7 voneinander abweichend hochglänzend, glänzend oder matt ausgebildet sein.

Der Reflektoreinsatz 8 ist in Fig. 1 strichliert dargestellt. Der Reflektoreinsatz 8 ist zur partiellen Abdeckung der Reflektorfläche 5 in einem definierten Abstand zur Lampe 4 (Fig. 2) lösbar angeordnet und weist eine konkave Krümmung auf, die zu einer asymmetrischen Lichtabstrahlung gemäß Fig. 5 führt.

Der Reflektoreinsatz 8 ist in diesem Ausführungsbeispiel ein einteiliges Stanz-Biegeteil mit einem Zuschnitt gemäß Fig. 3. Im eingebauten Zustand (Fig. 1 und 2) wird der Reflektoreinsatz 8 an einem unteren Reflektorrand 22 und an einem oberen Befestigungselement 20 des Reflektors 6 gehalten. Diese Halterung erfolgt mit einem unteren Halteelement 12, welches durch eine Abbiegung gebildet ist, und mit einer oberen Befestigungslasche 15, welche gabelförmig ausgebildet ist und mit einer Ausnehmung 17 auf das Befestigungselement 20 aufgeschoben werden kann. Damit reicht der Reflektoreinsatz 8 vertikal über die gesamte Reflektorfläche 5. In diesem Beispiel ist der Reflektoreinsatz 8 so dimensioniert, daß etwa ein Fünftel der Reflektorfläche 5 abgedeckt wird. Außenkanten 11 des Reflektoreinsatzes 8 liegen im eingebauten Zustand an der Reflektorfläche 5 an. Eine untere, nach außen zum Reflektor 6 abgebogene Deckfläche 21 fluchtet im eingebauten Zustand mit dem unteren Reflektorrand 22 unter Abdeckung eines Spaltes oder eines Zwischenraumes zwischen dem Reflektoreinsatz 8 und der Reflektorfläche 5. Das Halteelement 12, welches eine Abbiegung der Deckfläche 21 darstellt, umgreift den Reflektorrand 22 derart, daß eine horizontale Verstellung des Reflektoreinsatzes 8 in Umfangsrichtung des Reflektors 6 durchgeführt werden kann, um eine veränderte Lichtlenkung zu erreichen. Diese wird wesentlich von der Größe und Krümmung der Reflektorfläche 13 des Reflektoreinsatzes 8 bestimmt. Abhängig von der Ausbildung der oberen Befestigungslasche 15 und der Ausnehmung 17 kann der Reflektoreinsatz 8 zusätzlich neigungsverstellt werden.

Die Fig. 5 und 6 zeigen Lichtverteilungskurven einer Leuchte mit einer asymmetrischen Lichtabstrahlung (siehe Fig. 5), deren Richtung und Kurvenausbildung mit der erfindungsgemäßen Leuchte realisierbar ist, und einer Leuchte mit einer symmetrischen Lichtabstrahlung (Fig. 6), welche bei Bedarf mit einem verstellbaren Reflektoreinsatz 8 nachrüstbar ist. Weitere Ausführungsformen eines Reflektoreinsatzes sind möglich, beispielsweise mit einer Mehrfachkrümmung und/oder einer größeren, mehrteiligen Reflektorfläche.

Die Leuchte mit einem lösbaren und verstellbaren Reflektoreinsatz ermöglicht eine gezielte Lichtlenkung und die Realisierung unterschiedlicher Lichtabstrahlungen.

## Patentansprüche

1. Leuchte, insbesondere Einbau- oder Anbauleuchte, mit einer Lampe (4), einem Reflektor (6) und einem Reflektoreinsatz (8), welcher für eine asymmetrische Lichtabstrahlung verstellbar und mit wenigstens einem unteren Halteelement (12) an einem Reflektorrand(22) fixierbar ist,
dadurch **gekennzeichnet**,
daß an dem Reflektoreinsatz (8) ein Halteelement (15) ausgebildet ist, mit welchem der Reflektoreinsatz (8) im Zentrum des Reflektors (6) fixierbar ist.

2. Leuchte nach Anspruch 1,
dadurch **gekennzeichnet**,
daß an dem Reflektor (6) ein Reflektorboden (7) ausgebildet ist und daß der Reflektoreinsatz (8) als Halteelement (15) eine Befestigungslasche (15) aufweist, welche an dem Reflektorboden (7) lösbar gehalten ist.

3. Leuchte nach Anspruch 1 oder 2,
dadurch **gekennzeichnet**,
daß die Befestigungslasche (15) gabelförmig ausgebildet und an einem Befestigungselement (20) im Bereich des Reflektorbodens (7) fixierbar ist.

4. Leuchte nach einem der vorhergehenden Ansprüche,
dadurch **gekennzeichnet**,
daß die Befestigungslasche (15) eine Ausnehmung (17) aufweist und in vertikaler Richtung neigungsverstellbar ist.

5. Leuchte nach einem der vorhergehenden Ansprüche,
dadurch **gekennzeichnet**,
daß der mit der Befestigungslasche (15) am Reflektorboden (7) gehaltene Reflektoreinsatz (8) werkzeuglos über das untere Halteelement (12) horizontal verstellbar ist.

6. Leuchte nach einem der vorhergehenden Ansprüche,
dadurch **gekennzeichnet**,
daß das untere Halteelement (12) an einer abgewinkelten Abdeckfläche (21) ausgebildet ist und im eingebauten Zustand einen Reflektorrand (22) umgreift.

7. Leuchte nach Anspruch 6,
dadurch **gekennzeichnet**,
daß die abgewinkelte Abdeckfläche (21), welche etwa deckungsgleich zu dem zugehörigen Reflektorrand (22) ausgebildet ist, im eingebauten Zustand mit einer Lichtaustrittsseite (16) des Reflektors (6) nahezu fluchtet.

8. Leuchte nach einem der vorhergehenden Ansprüche,
dadurch **gekennzeichnet**,
daß der Reflektoreinsatz (8) mit dem unteren Halteelement (12), der Abdeckfläche (21) und der Befestigungslasche (15) als oberem Halteelement ein einteiliges Formteil ist.

9. Leuchte nach einem der vorhergehenden Ansprüche,
dadurch **gekennzeichnet**,
daß der Reflektoreinsatz (8) eine konkav gekrümmte Reflektorfläche (13) aufweist, welche in einem definierten Abstand zum Reflektor (6) verläuft, und daß der Reflektoreinsatz (8) mit Außenkanten (11) an Reflektorflächen (5) des Reflektors (6) nahezu anliegt.

10. Leuchte nach einem der vorhergehenden Ansprüche,
dadurch **gekennzeichnet**,
daß der Reflektoreinsatz (8) und der Reflektor (6) aus Aluminium hergestellt sind und eine hochglänzende oder matte Reflektorfläche (13, 5) aufweisen.

## Claims

1. Light fitting, particularly built-in or built-on light fitting, having a lamp (4), a reflector (6) and a reflector insert (8), which is adjustable for an asymmetrical light emission and is fixable with at least one lower holding element (12) to a reflector edge (22),
**characterized** in that
on the reflector insert (8) is constructed a holding element (15) with which the reflector (8) can be fixed in the centre of the reflector (6).

2. Light fitting according to claim 1,
**characterized** in that
on the reflector (6) is constructed a reflector base (7) and that the reflector insert (8) has as the holding element (15) a fastening clip (15) which is detachably held on the reflector base (7).

3. Light fitting according to claim 1 or 2,
**characterized** in that
the fastening clip (15) has a fork-like construction and is fixable to a fastening element (20) in the vicinity of the reflector base (7).

4. Light fitting according to one of the preceding claims,
**characterized** in that
the fastening clip (15) has a recess (17) and its inclination is adjustable in the vertical direction.

5. Light fitting according to one of the preceding claims,
**characterized** in that
the reflector insert (8) held with the fastening clip (15) on the reflector base (7) can be horizontally adjusted without tools by means of the lower holding element (12).

6. Light fitting according to one of the preceding claims,
**characterized** in that
the lower holding element (12) is constructed on a bent cover surface (21) and in the fitted state engages round a reflector edge (22).

7. Light fitting according to claim 6,
**characterized** in that
the bent cover surface (21) which is constructed roughly congruently to the associated reflector edge (22) is almost aligned with a light exit side (16) of the reflector (6) in the fitted state.

8. Light fitting according to one of the preceding claims,
**characterized** in that
the reflector insert (8) with the lower holding element (12), the cover surface (21) and the fastening clip (15) as the upper holding element is a one-piece moulding.

9. Light fitting according to one of the preceding claims,
**characterized** in that
the reflector insert (8) has a concavely curved reflector surface (13) which passes at a clearly defined spacing from the reflector (6) and that the reflector insert (8) with outer edges (11) almost engages on reflector surfaces (5) of the reflector (6).

10. Light fitting according to one of the preceding claims,
**characterized** in that
the reflector insert (8) and reflector (6) are made from aluminium and have a highly polished or matt reflector surface (13, 5).

## Revendications

1. Lampe en particulier lampe incorporée ou montée extérieurement, composée d'une lampe (4), d'un réflecteur (6) et d'un insert réfléchissant (8) qui peut être déplacé pour donner un rayonnement lumineux asymétrique et qui peut être fixé sur un bord (22) du réflecteur par au moins un élément inférieur de maintien (12),
caractérisée en ce que
l'insert réfléchissant (8) comprend un élément de maintien (15) qui permet de le fixer au centre du réflecteur (6).

2. Lampe selon la revendication 1,
caractérisée en ce que
le réflecteur (6) présente un fond (7) du réflecteur et l'insert réfléchissant (8) comporte comme élément de maintien (15) une patte de fixation (15) qui peut être montée de manière amovible sur le fond (7) du réflecteur.

3. Lampe selon la revendication 1 ou 2,
caractérisée en ce que
la patte de fixation (15) a la forme d'une fourche et peut être fixée à un élément de fixation (20) situé dans la zone du fond (7) du réflecteur.

4. Lampe selon une des revendications précédentes,
caractérisée en ce que
la patte de fixation (15) présente une encoche (17) et son inclinaison, en direction verticale, est réglable.

5. Lampe selon une des revendications précédentes,
caractérisée en ce que
l'insert réfléchissant (8), maintenu sur le fond (7) du réflecteur par la patte de fixation (15) peut être déplacé horizontalement, sans utilisation d'un outil, par l'intermédiaire de l'élément inférieur de maintien (12).

6. Lampe selon une des revendications précédentes,
caractérisée en ce que
l'élément inférieur de maintien (12) est formé sur une surface coudée de recouvrement (21) et en position montée, il est en prise autour d'un bord (22) du réflecteur.

7. Lampe selon la revendication 6,
caractérisée en ce que
la surface coudée de recouvrement (21), constituée de manière à être à peu près en coïncidence avec le bord correspondant (22) du réflecteur, est, en position montée, à peu près alignée avec la face (16) du réflecteur (6) par laquelle sort la lumière.

8. Lampe selon une des revendications précédentes,
caractérisée en ce que
l'insert réfléchissant (8) avec l'élément inférieur de maintien (12), la surface de recouvrement (21) et la patte de fixation (15) servant d'élément supérieur de maintien est une pièce moulée monobloc.

9. Lampe selon une des revendications précédentes,
caractérisée en ce que
l'insert réfléchissant (8) présente une surface réfléchissante (13) concave située à une distance définie du réflecteur (6) et l'insert réfléchissant (8) a des bords externes (11) à peu près en appui sur la surface réfléchissante (5) du réflecteur (6).

10. Lampe selon une des revendications précédentes,
caractérisée en ce que
l'insert réfléchissant (8) et le réflecteur (6) sont en aluminium et présentent une surface réfléchissante (13, 5) brillante ou mate.
